# FASCICULE DE BREVET EUROPEEN

(11) **EP 4 256 662 B1**
(45) Date de publication et mention de la délivrance du brevet: **20.11.2024**
(21) Numéro de dépôt: 21824531.4
(22) Date de dépôt: 02.12.2021
(51) Int. Cl.: H02B 11/24

(54) **DISPOSITIF DE CHÂSSIS POUR APPAREIL ÉLECTRIQUE DE COUPURE DÉBROCHABLE ET ENSEMBLE COMPRENANT UN TEL DISPOSITIF ET UN TEL APPAREIL**
EINSCHUB FÜR SCHALTGERÄT UND BAUGRUPPE BEINHALTEND EINEN SOLCHEN EINSCHUB UND EIN SOLCHES SCHALTGERÄT
FRAME FOR A DRAW-OUT ELECTRIC SWITCH AND ASSEMBLY COMPRISING SUCH A FRAME AND SUCH A SWITCH

(30) Priorité: 04.12.2020 FR 2012678
(43) Date de publication de la demande: 11.10.2023
(73) Titulaire: HAGER-ELECTRO SAS, 67210 Obernai (FR)
(72) Inventeur: ELOY, Stéphane, 67810 Holtzheim (FR); IZARD, Jérôme, 67380 Lingolsheim (FR); PUH, Nikola, 67120 Duttlenheim (FR)
(74) Mandataire: Cabinet Nuss
(86) Numéro de dépôt international: PCT/EP2021/084025
(87) Numéro de publication internationale: WO 2022/117751

(56) Documents cités:
- FR-A1- 2 777 695
- JP-U- S5 657 608
- US-B2- 9 299 522

## Description

La présente invention concerne le domaine des appareillages électriques de commutation, plus particulièrement du type disjoncteurs débrochables, et a pour objet un dispositif de châssis pour appareil électrique de coupure débrochable. Elle a également pour objet un ensemble comprenant un tel dispositif de châssis et un tel appareil.

On connait des dispositifs de châssis pour appareils électriques débrochables, dénommés par la suite appareils, du type disjoncteurs débrochables, lesdits dispositifs de châssis comprenant un châssis fixe présentant une forme de caisson ou de cadre avec deux côtés latéraux opposés et un côté arrière ou fond comprenant des bornes de raccordement principales destinées à être connectées électriquement à des circuits principaux. Le dispositif de châssis comprend en outre généralement des bornes de raccordement secondaires montés dans un autre côté que le côté arrière du châssis, généralement dans le côté supérieur du châssis.

Le côté avant du châssis comprend une ouverture d'entrée permettant d'insérer un appareil dans l'espace de réception en direction du côté arrière par un mouvement de coulissement, généralement à l'aide de glissières fixées dans les côtés latéraux du châssis.

Un tel appareil comprend des connecteurs principaux et des connecteurs secondaires permettant sa connexion électrique respectivement aux bornes de raccordement principales et aux bornes de raccordement secondaires lorsque l'appareil est inséré fonctionnellement dans le châssis. Les bornes de raccordement principales sont généralement montées dans le côté arrière selon deux rangées de bornes de raccordement principales superposées, une rangée haute et une rangée basse.

Le dispositif de châssis comporte en outre un système d'embrochage comprenant, d'une part, un mécanisme de transmission mécanique comportant un arbre menant, un arbre mené formant un axe d'entraînement et une transmission reliant ces derniers entre eux de sorte que la rotation de l'arbre menant entraîne la rotation de l'arbre mené via ladite transmission et, d'autre part, un mécanisme de liaison apte à relier l'arbre mené à l'appareil lors de son insertion dans l'espace de réception pour pouvoir le déplacer par coulissement dans ce dernier dans plusieurs positions, lors de la rotation de l'arbre mené. Généralement, ces dispositifs de châssis sont prévus pour pouvoir déplacer l'appareil dans le châssis dans trois positions à savoir une position, dite position connectée ou embrochée, dans laquelle l'appareil est connecté aux bornes de raccordement principales, une position, dite position déconnectée ou débrochée, dans laquelle l'appareil n'est connecté ni aux bornes de raccordement principales, ni le cas échéant aux bornes de raccordement secondaires et peut être en conséquence extrait du châssis et une position intermédiaire, dite position test, permettant de tester ou de contrôler l'état de l'appareil dans laquelle l'appareil n'est pas connecté aux bornes de raccordement principales, le cas échéant dans laquelle position test l'appareil est connecté uniquement aux bornes de raccordement secondaires. Ces trois positions du disjoncteur correspondent ainsi à trois positions du système d'embrochage.

L'arbre mené est disposé dans le côté arrière du châssis en s'étendant perpendiculairement aux côtés latéraux et à l'arbre menant. Il s'étend généralement au niveau de la zone entre la rangée haute et la rangée basse des bornes de raccordement principales. La transmission comporte, d'une part, une roue dentée (pignon) reliée axialement à l'arbre mené et, d'autre part, une vis sans fin coopérant avec la roue dentée par engrenage en étant intégrée dans ou fixé sur l'arbre menant de sorte que la rotation de l'arbre menant entraîne la rotation de l'arbre mené via la vis sans fin et la roue dentée.

Le système d'embrochage comprend en outre un organe de manoeuvre amovible du type manivelle permettant d'actionner le mécanisme de transmission. A cet effet, la manivelle est introduite dans une ouverture d'actionnement située dans la partie avant du châssis dans l'axe de l'arbre menant. Lorsque la manivelle est insérée fonctionnellement dans ladite ouverture d'actionnement, ladite manivelle est raccordée fonctionnellement à l'arbre menant de sorte que la rotation de la manivelle entraîne la rotation de l'arbre menant pour actionner l'arbre mené via la transmission.

Le système d'embrochage comprend en outre un mécanisme de verrouillage permettant de le verrouiller en empêchant l'introduction de la manivelle dans l'ouverture d'actionnement et/ou en bloquant le mouvement cinématique du mécanisme de transmission. La commande du mécanisme de verrouillage est généralement réalisée à l'aide d'un organe de verrouillage du type bouton poussoir mobile entre une position de commande du mécanisme de verrouillage et une position de verrouillage de ladite commande. La position de commande correspond à une position enfoncée de l'organe de verrouillage, généralement dans un côté de la face avant du châssis autour de l'ouverture de réception du disjoncteur, et la position de verrouillage correspond à une position non enfoncée de l'organe de verrouillage et bloquée dans cette position au moyen d'un cadenas engagé dans une ouverture pratiquée dans ledit organe de verrouillage de sorte à empêcher son enfoncement.

Un tel dispositif de châssis est, par exemple, décrit et illustré dans le document FR2773648.

D'autre part, pour sécuriser l'accès aux bornes de raccordement intégrées dans la face arrière du châssis lorsque l'appareil n'est pas dans la position embrochée dans le châssis ou n'est pas inséré dans ce dernier, le côté arrière du châssis comprend généralement des fenêtres en regard des bornes de raccordement et des volets mobiles entre une position de fermeture permettant la fermeture desdites fenêtres pour empêcher l'accès aux bornes de raccordement et une position d'ouverture desdites fenêtres pour permettre l'accès. Un volet haut est prévu pour les fenêtres de la rangée haute de bornes de raccordement principales et un volet bas est prévu les fenêtres de la rangée basse de bornes de raccordement principales.

Ces dispositifs de châssis équipés de volets comprennent en outre un système de commande desdits volets comportant des pièces de commande mobiles du type poussoir, généralement en forme de T, guidées en translation entre une position enfoncée dans le côté arrière et une position extraite dans l'espace de réception du châssis. Le déplacement des pièces de commande depuis leur position extraite jusqu'à leur position enfoncée est réalisé par une poussée de l'appareil sur ces dernières lors de son coulissement dans l'espace de réception du châssis vers le côté arrière depuis sa position test pour le mettre en position connectée. Le déplacement des pièces de commande depuis leur position enfoncée jusqu'à leur position extraite est réalisé automatiquement grâce à un moyen de rappel lors du coulissement du disjoncteur pour le mettre en position test ou déconnectée ou pour l'extraire de l'espace de réception du châssis. Le système de commande comprend des cames reliant les pièces de commande aux volets et étant entraînées par lesdites pièces de commande lors de leur déplacement. Un système de verrouillage permet de verrouiller les volets en bloquant les pièces de commande dans leur position extraite à l'aide de cadenas engagés dans des ouvertures pratiquées dans lesdites pièces de commande empêchant ainsi leur enfoncement. Un tel système de verrouillage est décrit dans les documents US 9 299 522 B2 et JP S56 57608 U.

Chaque volet est généralement constitué par deux panneaux ajourés mobiles en coulissement en sens inverse l'un de l'autre et disposés l'un derrière l'autre de sorte à permettre, dans la position de fermeture du volet, un recouvrement des jours de l'un des panneaux par les parties pleines de l'autre panneau et, dans la position d'ouverture du volet, la mise en regard des jours de l'un des panneaux avec les jours de l'autre panneau, lesdits jours formant les fenêtres d'accès aux bornes de raccordement principales. Dans une autre forme de réalisation connue, chaque volet est constitué par un panneau ajouré mobile en coulissement derrière un panneau fixe ajouré et disposés l'un derrière l'autre de sorte à permettre, dans la position de fermeture du volet, un recouvrement des jours de l'un des panneaux par les parties pleines de l'autre panneau et, dans la position d'ouverture du volet, la mise en regard des jours de l'un des panneaux avec les jours de l'autre panneau, lesdits jours formant les fenêtres d'accès aux bornes de raccordement principales.

Toutefois, dans ces dispositifs de châssis équipés de tels volets, il faut avoir recours à deux opérations de verrouillage pour verrouiller l'ensemble du châssis, c'est-à-dire l'une pour verrouiller le système d'embrochage et l'autre pour verrouiller les volets. L'opération de verrouillage des volets est particulièrement contraignante car l'opérateur doit poser autant de cadenas que de pièces de commande, c'est-à-dire en générale, pour les volets haut et bas, de l'ordre de 2 à 6 cadenas.

La présente invention a pour but de pallier ces inconvénients.

A cet effet, le dispositif de châssis, selon la présente invention, pour appareil électrique de coupure débrochable, ledit dispositif comprenant un châssis fixe, des bornes de raccordement électrique principales et des fenêtres d'accès auxdites bornes de raccordement, ledit châssis comportant un espace de réception apte à recevoir un appareil électrique de coupure débrochable et présentant deux côtés opposés dont l'un, dit côté avant, comporte une ouverture d'entrée permettant l'insertion de l'appareil dans ledit espace de réception et l'autre, dit côté arrière, comprend lesdites bornes de raccordement et fenêtres, ledit dispositif comprenant en outre, d'une part, un système d'embrochage comprenant un arbre mené s'étendant parallèlement au côté arrière et un mécanisme de liaison apte à être relié mécaniquement à l'appareil et à être actionné par l'arbre mené de sorte à déplacer ledit appareil dans l'espace de réception vers le côté arrière dans plusieurs positions correspondant chacune à une position fonctionnelle du système d'embrochage et, d'autre part, au moins un volet mobile entre une position de fermeture desdites fenêtres empêchant l'accès auxdites bornes de raccordement et une position d'ouverture desdites fenêtres permettant ledit accès et réciproquement, un système de commande et d'actionnement du ou desdits volet(s) et un système de verrouillage du ou desdits volet(s), se caractérisant en ce que le système de verrouillage comprend au moins un ensemble de verrouillage comportant une came montée sur l'arbre mené, ou intégrée dans ce dernier, de sorte à être entraînée en rotation par l'arbre mené et un suiveur de verrouillage apte à être mis en mouvement par ladite came de sorte à être déplacé, selon la position fonctionnelle du système d'embrochage, entre une position de verrouillage bloquant le ou au moins l'un des volets en position de fermeture ou d'ouverture et une position de déverrouillage débloquant le ou les volets.

Un tel dispositif selon a présente invention permet d'intégrer une fonction de verrouillage en lien avec ledit système d'embrochage et ainsi de verrouiller le ou les volet(s) par l'actionnement du système d'embrochage, évitant l'utilisation et la mise en place des cadenas de verrouillage des dispositifs actuels.

En outre, dans le cas où le système d'embrochage du dispositif de châssis, comme c'est le cas généralement, comprend trois positions fonctionnelles pour pouvoir déplacer l'appareil dans le châssis, à savoir une position, dite position connectée ou embrochée, dans laquelle l'appareil est connecté aux bornes de raccordement principales, une position, dite position déconnectée ou débrochée, dans laquelle l'appareil n'est connecté ni aux bornes de raccordement principales, ni le cas échéant à des bornes de raccordement secondaires, et peut être en conséquence extrait du châssis et une position intermédiaire, dite position test, permettant de tester ou de contrôler l'état de l'appareil dans laquelle l'appareil n'est pas connecté aux bornes de raccordement principales, la présente invention prévoit, préférentiellement, que la position de verrouillage du suiveur de verrouillage du ou de chaque ensemble de verrouillage est réalisée dans la position connectée du système d'embrochage, ce qui correspond à une rotation prédéterminée de l'arbre mené. En outre, dans le cas où, de manière connue, le dispositif de châssis comprend un mécanisme de verrouillage du système d'embrochage, la position connectée du système d'embrochage peut être également verrouillée empêchant l'actionnement du système de verrouillage du ou desdits volet(s).

La présente invention a également pour objet un ensemble comprenant un dispositif de châssis et un appareil électrique de coupure débrochable, ledit dispositif de châssis comprenant un châssis recevant ledit appareil électrique de coupure débrochable et un système d'embrochage monté dans le châssis caractérisé en ce que le dispositif de châssis consiste en un dispositif de châssis selon la présente invention.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] représente une vue en perspective d'un dispositif de châssis selon la présente invention, dans un mode de réalisation avec un volet haut et un volet bas, dans un mode de réalisation préférentiel du suiveur de verrouillage permettant de verrouiller simultanément à la fois le volet haut et le volet bas et dans un mode de réalisation préférentiel de chaque volet constitué de deux panneaux coulissant l'un derrière l'autre,
[Fig. 2] montre un ensemble selon la présente invention comprenant le dispositif de châssis représenté sur la figure 1 et un appareil électrique de coupure débrochable en phase d'insertion dans l'espace interne du châssis,
[Fig. 3] représente une vue en coupe transversale partielle d'une partie du dispositif de châssis représenté sur la figure 1 située au niveau de l'ensemble de verrouillage des volets, dans la position de déverrouillage du suiveur de verrouillage et dans la position déconnectée du système d'embrochage,
[Fig. 4] est vue en perspective de la partie du dispositif de châssis représentée sur la figure 3,
[Fig. 5] montre la partie du dispositif de châssis représentée sur la figure 3 dans la position de verrouillage du suiveur de verrouillage sollicité par la came, dans la position connectée du système d'embrochage,
[Fig. 6] est vue en perspective de la partie du dispositif de châssis représentée sur la figure 5,
[Fig. 7] est une de face du volet haut du dispositif de châssis représenté sur la figure 1, en position fermée dudit volet haut, avec une première encoche de verrouillage du panneau avant en regard d'une première encoche de verrouillage du panneau arrière pour permettre l'insertion de l'extrémité de verrouillage haute du suiveur de verrouillage dans lesdites encoches de verrouillage lorsque le suiveur de verrouillage est sollicité par la came dans sa position de verrouillage représentée sur la figure 5,
[Fig. 8] est une vue de détail de la partie inférieure du volet haut représenté sur la figure 7 comprenant les encoches de verrouillage,
[Fig. 9] montre le volet haut représenté sur la figure 7, en position ouverte dudit volet haut, avec une deuxième encoche de verrouillage du panneau avant en regard d'une deuxième autre encoche de verrouillage du panneau arrière pour permettre l'insertion de l'extrémité de verrouillage haute du suiveur de verrouillage dans lesdites encoches de verrouillage en regard l'une de l'autre lorsque le suiveur de verrouillage est sollicité par la came dans sa position de verrouillage représentée sur la figure 5,
[Fig.10] est une vue de détail de la partie du volet haut représenté sur la figure 9 comprenant les encoches de verrouillage,
[Fig.11] est une vue en perspective du dispositif de châssis montrant partiellement le côté arrière du châssis avec l'ensemble de verrouillage et l'arbre mené et un côté latéral de ce dernier supportant au moins une partie du système d'embrochage,
[Fig.12] est une vue de détail de la figure 11,
[Fig.13] est une vue en perspective de la came de l'ensemble de verrouillage du dispositif de châssis représenté sur la figure 1,
[Fig.14] est une vue de profil du suiveur associé à la came représentée sur la figure 9,
[Fig.15] est une vue de dessus du suiveur de la figure 14.

Les figures montrent un dispositif de châssis pour appareil électrique de coupure débrochable, ledit dispositif de châssis comprenant un châssis 1 fixe, des bornes de raccordement électrique principales et des fenêtres 1a d'accès auxdites bornes de raccordement. Le châssis 1 comporte un espace de réception 1b apte à recevoir un appareil 2 électrique de coupure débrochable, dénommé par la suite appareil 2, par exemple du type disjoncteur débrochable, et présente deux côtés opposés 1c, 1d dont l'un, dit côté avant 1c, comporte une ouverture d'entrée 10c permettant l'insertion de l'appareil 2 dans ledit espace de réception 1b et l'autre, dit côté arrière 1d, comprend lesdites bornes de raccordement électrique principales et fenêtres 1a.

Le dispositif de châssis selon la présente invention comprend en outre, de manière connue :
- un système d'embrochage 3 comprenant un arbre mené 31a s'étendant parallèlement au côté arrière 1d et un mécanisme de liaison 3c apte à être relié mécaniquement à l'appareil 2 et à être actionné par l'arbre mené 31a de sorte à déplacer ledit appareil 2 dans l'espace de réception 1b vers le côté arrière 1d dans plusieurs positions qui correspondent chacune à une position fonctionnelle du système d'embrochage 3,
- au moins un volet 4 mobile entre une position de fermeture desdites fenêtres 40a, 40b empêchant l'accès aux bornes de raccordement et une position d'ouverture desdites fenêtres 1a permettant ledit accès et réciproquement,
- un système de commande et d'actionnement 5 du ou desdits volet(s) 4,
- et un système de verrouillage 6 du ou desdits volet(s) 4.

Conformément à la présente invention, le système de verrouillage 6 du ou desdits volet(s) 4 comprend au moins au moins un ensemble de verrouillage 6a, 6b, 6c, 6d comportant une came 6a montée sur l'arbre mené 31a, ou intégrée dans ce dernier, de sorte à être entraînée en rotation par l'arbre mené 31a et un suiveur de verrouillage 6b apte à être mis en mouvement par ladite came 6a de sorte à être déplacé, selon la position fonctionnelle du système d'embrochage 3, entre une position de verrouillage bloquant le ou au moins l'un des volets 4 en position de fermeture ou d'ouverture et une position de déverrouillage débloquant le ou les volets 4.

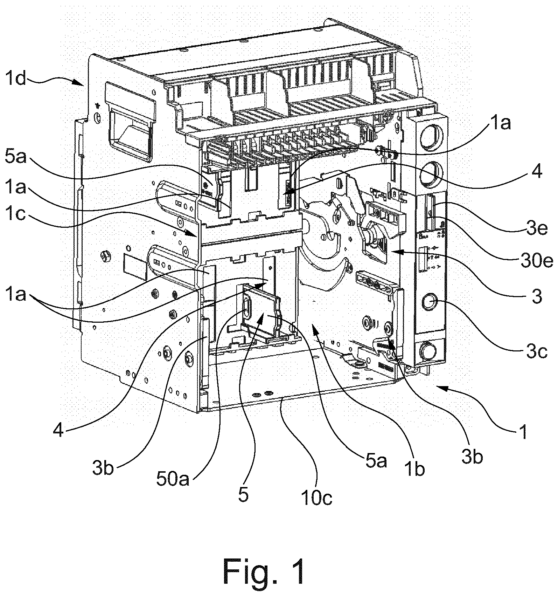

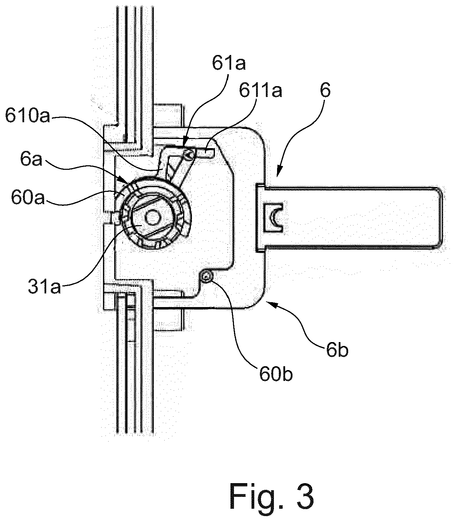

Dans un mode de réalisation préférentiel du dispositif de châssis, comme on peut le voir sur les figures 1, 3, 4, 5, 6, 11, 12, celui-ci peut comprendre de manière connue, et en considérant une orientation verticale du côté arrière 1d, deux étages haut et bas de bornes de raccordement et de fenêtres 1a d'accès auxdites bornes de raccordement et un volet 4, dit volet 4 haut, pour la fermeture ou l'ouverture des fenêtres 1a de l'étage haut et un volet 4, dit volet 4 bas, pour la fermeture ou l'ouverture des fenêtres 1a de l'étage bas, le volet 4 haut étant disposé au-dessus de l'arbre mené 31a et le volet 4 bas étant disposé au-dessous de l'arbre mené 31a. En outre, selon la présente invention, comme on peut le voir sur les figures 3, 4, 5, 6, 11, 14, dans ce mode de réalisation préférentiel, le suiveur de verrouillage 6b peut être apte à bloquer, dans sa position de verrouillage, à la fois et simultanément, le volet 4 haut et le volet 4b bas dans leur position de fermeture ou d'ouverture et à débloquer, dans sa position de déverrouillage, lesdits volets 4 haut et bas.

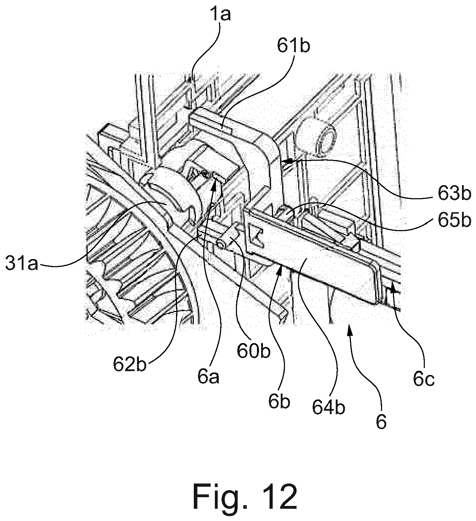

Si on se réfère plus particulièrement à la figure 12, on peut voir que le ou chaque ensemble de verrouillage peut comprendre une coulisse 6c et le suiveur de verrouillage 6b peut être monté en translation dans ladite coulisse 6c suivant une direction perpendiculaire à l'arbre mené 31a. De préférence cette direction peut être perpendiculaire à l'arbre mené 31a et au plan du ou des volet(s) 4.

Le suiveur de verrouillage 6b peut comprendre une partie d'accrochage 60b et la came 6a peut présenter un profil de came configuré pour être en contact avec ladite partie d'accrochage 60b de manière discontinue (figures 3, 4, 5, 6, 11, 12) ou, non représentée, de manière continue.

Le ou chaque ensemble de verrouillage peut comprendre en outre des moyens de rappel 6d, par exemple du type ressort de compression ou de traction, reliant le suiveur de verrouillage 6b à un point fixe du châssis 1 de sorte à exercer une force de rappel sur ledit suiveur de verrouillage 6b tendant à le ramener vers sa position de déverrouillage.

Le ou chaque volet 4 peut comporter au moins une encoche de verrouillage 41a, 42a, 41b, 42b et le ou chaque suiveur de verrouillage 6b peut comprendre au moins une extrémité de verrouillage 61b, 62b apte à venir, dans la position de verrouillage du suiveur de verrouillage 6b, s'engager dans la ou au moins l'une desdites encoche(s) 41a, 42a, 41b, 42b du ou de l'un des volets 4 pour bloquer le ou les volets 4 en position de fermeture ou d'ouverture et, dans la position de déverrouillage, à être extrait de la ou au moins l'une desdites encoche(s) 41a, 42a, 41b, 42b pour débloquer le ou les volets 4.

Dans le mode de réalisation préférentiel du dispositif de châssis comprenant un volet 4 haut et un volet 4 bas, le suiveur de verrouillage 6b, comme on peut le voir sur les figures 3, 4, 5, 6, 11, 12 et 14, peut comprendre :
- une extrémité de verrouillage 61b supérieure apte à venir, dans la position de verrouillage du suiveur de verrouillage 6b, s'engager dans la ou au moins l'une desdites encoche(s) 41a, 42a, 41b, 42b du volet 4 haut pour le bloquer en position de fermeture ou d'ouverture et, dans la position de déverrouillage du suiveur de verrouillage 6b, à être extrait de la ou au moins l'une desdites encoche(s) 41a, 42a, 41b, 42b pour débloquer le volet 4 haut, et
- une extrémité de verrouillage 62b inférieure apte à venir, dans la position de verrouillage du suiveur de verrouillage 6b, s'engager dans la ou au moins l'une desdites encoche(s) 41a, 42a, 41b, 42b du volet 4 bas pour le bloquer en position de fermeture ou d'ouverture et, dans la position de déverrouillage du suiveur de verrouillage 6b, à être extrait de la ou au moins l'une desdites encoche(s) 41a, 42a, 41b, 42b pour débloquer le volet 4 bas.

On comprendra que les volets 4 haut et bas sont, de préférence, symétriques dans leur positionnement relatif et/ou leur forme et/ou structure. Les encoches de verrouillage 41a, 42a, 41b, 42b du volet 4 haut sont de préférence situées sur le bord inférieur dudit volet 4 haut et les encoches de verrouillage 41a, 42a, 41b, 42b du volet 4 bas sont de préférence situées sur le bord supérieur dudit volet 4 haut pour pouvoir être accessibles par le suiveur de verrouillage 6b agissant sur les volets 4 tout en minimiser l'encombrement de ce dernier.

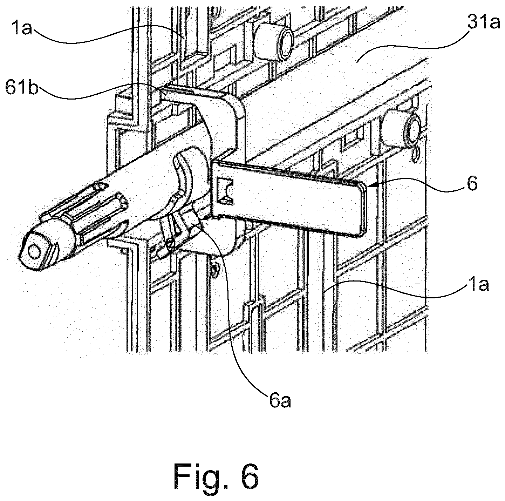

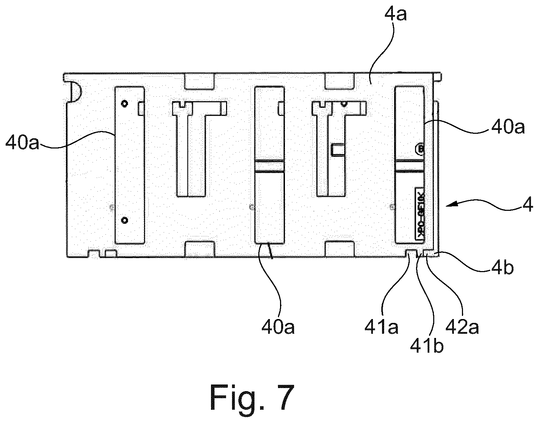

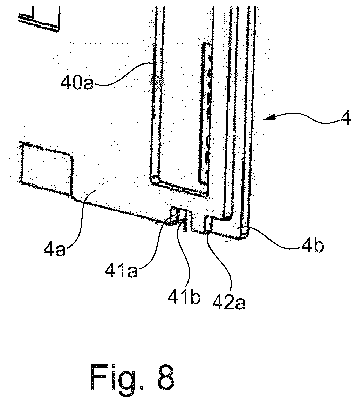

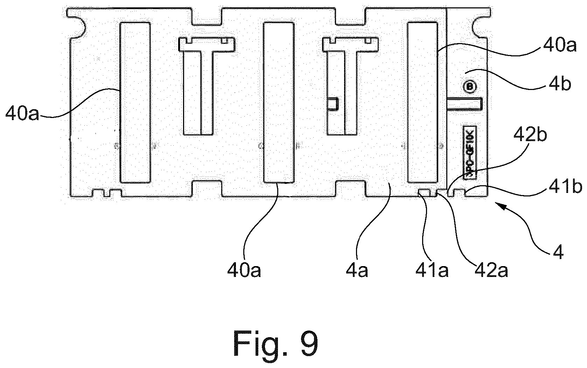

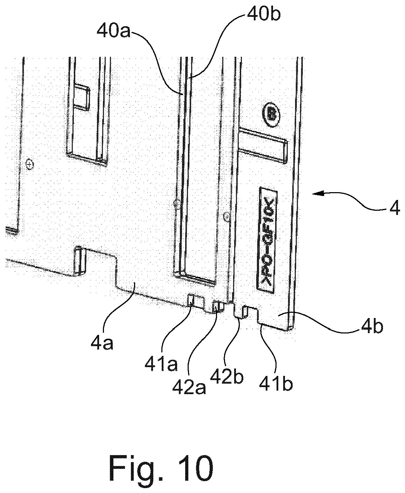

Dans une première forme de réalisation connue du ou de chaque volet 4, comme on peut le voir sur les figures 6, 7, 8, 9 et 10, peut être constitué le ou chaque volet 4, de manière connue, peut être constitué de deux panneaux 4a, 4b coulissant chacun de sorte à pouvoir être déplacés en translation dans leur plan l'un derrière l'autre parallèlement à l'arbre mené 31a et étant chacun ajouré par des ouvertures traversantes 40a, 40b. La position d'ouverture dudit volet 4, c'est-à-dire du ou de chaque volet 4 (figures 9 et 10), correspond à un déplacement des deux panneaux 4a, 4b dans une position où les ouvertures traversantes 40a, 40b des deux panneaux 4a sont en regard des fenêtres 1a. Dans cette position d'ouverture, chaque ouverture traversantes 40a de l'un des panneaux 4a est donc en regard d'une ouverture traversante 40b de l'autre panneau 4b. La position de fermeture dudit volet 4, c'est-à-dire du ou de chaque volet 4 (figures 1, 7 et 8), correspond à un déplacement des panneaux 4a, 4b où chaque fenêtre 1a est en regard d'une partie pleine de chaque panneau 4a, 4b. Dans cette position de fermeture, chaque ouverture traversante 40a ou 40b de l'un des panneaux 4a ou 4b est donc en regard d'une partie plaine de l'autre panneau 4a ou 4b

Dans cette première forme de réalisation du ou de chaque volet 4, la présente invention peut alors prévoir en outre que chaque panneau 4a, 4b comprenne deux encoches de verrouillage, à savoir une première encoche de verrouillage 41a, 41b et une deuxième encoche de verrouillage 42a, 42b, lesdites premières encoches de verrouillage 41a, 41b étant en vis-à-vis en position de fermeture dudit volet 4 et lesdites deuxièmes encoches de verrouillage 41a, 41b étant en vis-à-vis en position d'ouverture dudit volet 4 de sorte que la ou l'une des extrémité(s) de verrouillage 61b, 62b du suiveur de verrouillage 6b puisse venir s'engager dans la première encoche de verrouillage 41a, 41b de chaque panneau 4a, 4b en position de fermeture (figures 1, 7 et 8) dudit volet 4 ou dans la deuxième encoche de verrouillage 42a, 42b de chaque panneau 4 en position d'ouverture (figures 9 et 10) dudit volet 4.

Dans une deuxième forme de réalisation connue du ou de chaque volet 4, non représentée, le ou chaque volet 4 peut être constitué d'un panneau coulissant de sorte à pouvoir être déplacé en translation dans son plan parallèlement à l'arbre mené 31a et étant ajouré par des ouvertures traversantes. La position d'ouverture dudit volet 4 correspond à un déplacement du panneau dans une position où les ouvertures traversantes sont en regard des fenêtres 1a et la position de fermeture dudit volet 4 correspond à un déplacement du panneau où une partie pleine dudit panneau est en regard de chaque fenêtre 1a. Dans cette deuxième forme de réalisation du ou de chaque volet 4, la présente invention peut alors prévoir en outre que le panneau comprenne deux encoches de verrouillage de sorte que la ou l'une des extrémité(s) de verrouillage 61b, 62b du suiveur de verrouillage 6b vienne s'engager dans la première encoche de verrouillage dudit volet 4 en position de fermeture ou dans la deuxième encoche de verrouillage dudit volet 4 en position d'ouverture.

Dans la première ou deuxième forme de réalisation connue du ou de chaque volet 4, le ou chaque panneau 4a, 4b, peut comprendre deux bords longitudinaux s'étendant parallèlement à l'arbre mené et dans l'un desquels bords longitudinaux sont pratiquées les encoches de verrouillage 41a, 41b ou 41b, 42b. Ainsi, en position montée du ou des volet(s) 4 dans le châssis, les encoches de verrouillage 41a, 41b ou 41b, 42b sont situées respectivement dans le bord longitudinal supérieur du volet 4 bas et dans le bord longitudinal inférieur du volet 4 haut.

La présente invention peut prévoir de préférence un ou deux ensembles de verrouillage. Dans le cas de deux ensembles de verrouillage, la présente invention peut prévoir que l'un des ensembles de verrouillage soit situé à proximité de l'un des côtés latéraux du châssis et l'autre à proximité de l'autre côté latéral opposé. Deux ensembles de verrouillage ou plus, permettant de renforcer la solidité du verrouillage du ou des volets 4.

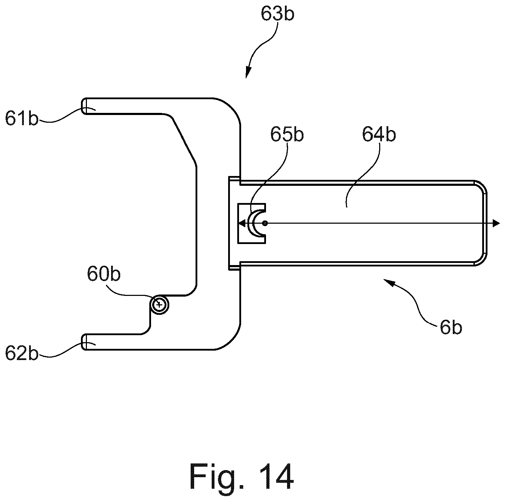

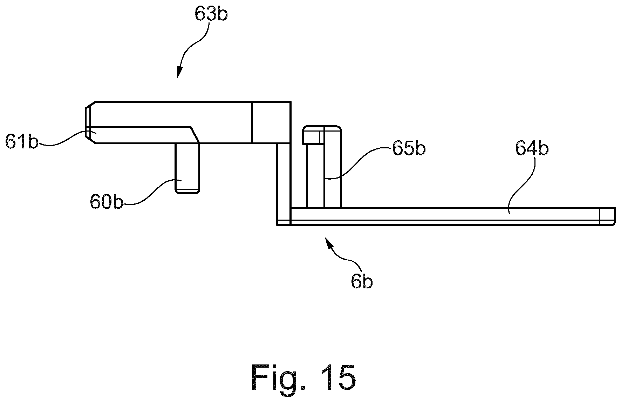

Si on se réfère maintenant aux figures 14 et 15, on peut voir que le suiveur de verrouillage 6b peut comprendre une tête de verrouillage 63b comprenant la ou les extrémités de verrouillage 61b, 62b et un corps 64b, de préférence allongé, configuré pour pouvoir glisser dans la coulisse 6c. La coulisse 6c peut consister en une rainure pratiquée dans le châssis 1 et le long de laquelle rainure peut glisser le corps 64b (figure 12).

Dans le cas où le suiveur de verrouillage 6b comprend deux extrémités de verrouillage 61b, 62b supérieure et inférieure, la tête de verrouillage 63b, portant lesdites extrémités de verrouillage 61b, 62b, peut présenter une forme en U et chaque extrémité de verrouillage 61b, 62b supérieure ou inférieure peut être formée par l'extrémité de l'une des branches du U (voir notamment les figures 3, 4, 5, 6, 11, 12, 14).

En outre la partie d'accrochage 60b en contact de manière continue ou discontinue avec la came 6a peut consister en un axe d'accrochage s'étendant latéralement de la tête de verrouillage 63b, de préférence parallèlement à l'arbre mené 31a, le cas échéant en s'étendant latéralement de l'une des branches du U.

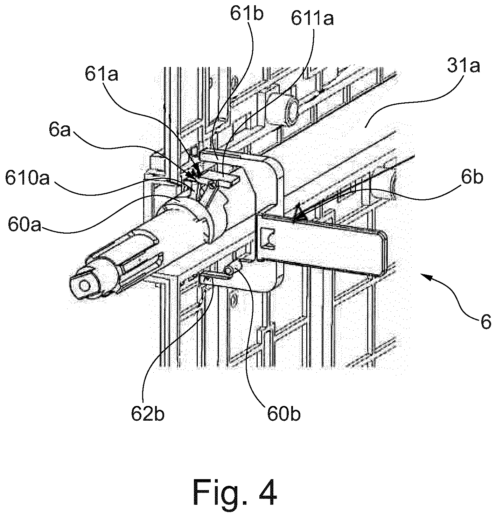

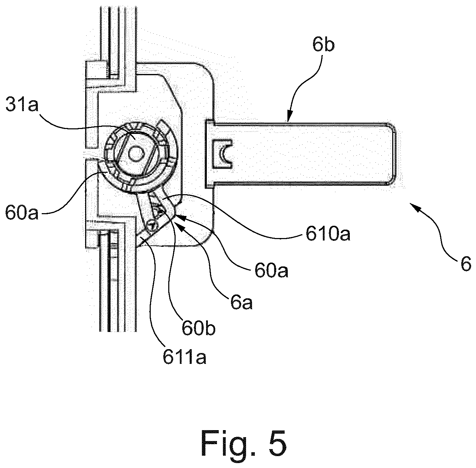

Dans le cas où la came 6a est configurée pour être en contact de manière discontinue avec le suiveur de verrouillage 6b, un tel axe d'accrochage 60b n'est pas en contact avec la came 6a lorsque le suiveur de verrouillage 6b et en position de déverrouillage (figures 3 et 4). Lors de la rotation de l'arbre mené 31a entraînant solidairement la came 6a en rotation, celle-ci va être mise en contact avec l'axe d'accrochage 60b en entraînant le suiveur de verrouillage 6b en déplacement vers sa position de verrouillage (figures 5 et 6).

Dans le cas où la came 6a est configurée pour être en contact de manière continue avec le suiveur de verrouillage 6b, un tel axe d'accrochage 60b est en contact permanent avec la came 6a que le suiveur de verrouillage 6b soit en position de déverrouillage ou de verrouillage.

D'autre part le corps de verrouillage 64b peut comporter, comme on peut le voir notamment sur les figures 12, 14 et 15, un élément de fixation 65b du moyen de rappel, par exemple de l'extrémité d'un ressort de traction non représenté.

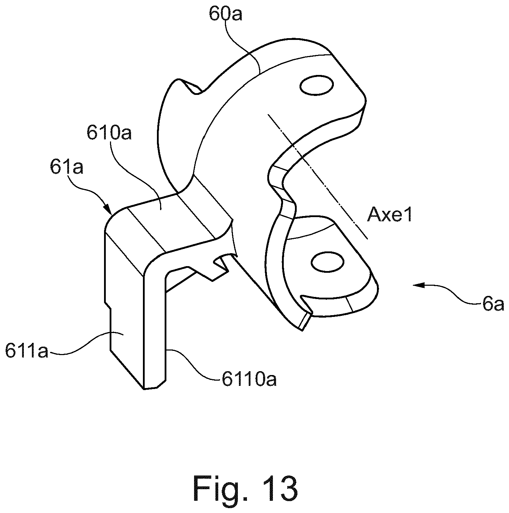

Si on se réfère plus particulièrement aux figures 3, 4, 5, 6 ,11, 12 et 13, on peut voir que la came 6a peut présenter un corps 60a, par exemple de forme globalement annulaire ou semi-annulaire, permettant sa fixation sur l'arbre mené 31a, généralement de forme cylindrique, par exemple par vissage, et une aile d'accrochage 61a apte à venir en contact avec la partie d'accrochage 60b du suiveur de verrouillage 6b. Dans une forme particulière, l'aile d'accrochage 61a peut présenter une forme globalement en L dont l'une des branches 610a est fixée sur la surface externe du corps 60a en s'étendant radialement de celui-ci. L'aile d'accrochage 61a peut présenter une surface de contact interne 6110a apte à être en contact avec la partie d'accrochage 60b du suiveur de verrouillage 6b pour assurer son déplacement en translation.

Le dispositif de châssis selon la présente invention peut être prévu pour pouvoir déplacer l'appareil 2 dans le châssis 1 dans trois positions à savoir une position, dite position connectée ou embrochée, dans laquelle l'appareil 2 est connecté aux bornes de raccordement principales, et le cas échéant à des bornes de raccordement secondaires, une position, dite position déconnectée ou débrochée, dans laquelle l'appareil 2 n'est connecté ni aux bornes de raccordement principales, ni à aux bornes de raccordement secondaires et peut être en conséquence extrait du châssis 1 et une position intermédiaire, dite position test, permettant de tester ou de contrôler l'état de l'appareil 2 dans laquelle l'appareil est connecté uniquement aux bornes de raccordement secondaires, c'est-à-dire sans être connecté aux bornes de raccordement principales. Ces trois positions de l'appareil 2 correspondent ainsi à trois positions fonctionnelles correspondantes du système d'embrochage 3.

Les bornes de raccordement secondaires, que peut comprendre en outre le dispositif de châssis selon la présente invention, peuvent être situées, comme c'est le cas généralement, dans un autre côté du châssis 1 que celui des bornes de raccordement principales

Le système d'embrochage 3 du dispositif de châssis selon la présente invention peut ainsi comprendre trois position fonctionnelles pour pouvoir déplacer l'appareil 2 dans le châssis 1, à savoir une position, dite position connectée ou embrochée, dans laquelle l'appareil 2 est connecté aux bornes de raccordement principales, et le cas échéant aux bornes de raccordement secondaires, une position, dite position déconnectée ou débrochée, dans laquelle l'appareil n'est connecté ni aux bornes de raccordement principales, ni le cas échéant aux bornes de raccordement secondaires, et une position intermédiaire, dite position test, permettant de tester ou de contrôler l'état de l'appareil 2 et dans laquelle l'appareil 2 n'est pas connecté aux bornes de raccordement principales. La position de verrouillage du suiveur de verrouillage 6b du ou de chaque ensemble de verrouillage est alors réalisée préférentiellement dans ladite position connectée du système d'embrochage 3.

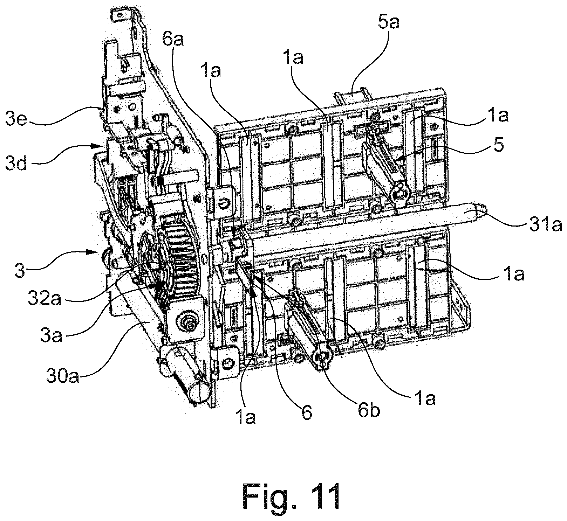

Le système de commande et d'actionnement 5 du ou des volets 4 peut comporter, de manière connue, des pièces de commande 5a mobiles du type poussoir, généralement en forme de T, guidées en translation entre une position enfoncée dans le côté arrière 1d et une position extraite (figures 1 et 11) dans l'espace de réception 1b de l'appareil 2. Le déplacement des pièces de commande 5a depuis leur position extraite jusqu'à leur position enfoncée est réalisé par une poussée de l'appareil 2 sur ces dernières lors de son coulissement dans l'espace de réception 1b du châssis 1 vers le côté arrière 1d pour le mettre en position connectée. Le déplacement des pièces de commande 5a depuis leur position enfoncée jusqu'à leur position extraite est réalisé automatiquement grâce à un moyen de rappel lors du coulissement de l'appareil 2 pour le mettre en position test ou déconnectée ou pour l'extraire de l'espace de réception 1b du châssis 1. Le système de commande et d'actionnement 5 peut comprendre des cames, non visibles, reliant les pièces de commande 5a au(x) volet(s) 4 et étant entraînées par lesdites pièces de commande 5a lors de leur déplacement. Un système de verrouillage, non représenté, permet de verrouiller de manière additionnelle, si besoin, le ou les volets 4 en bloquant les pièces de commande 5a dans leur position extraite à l'aide de cadenas, non représentés, engagés dans des ouvertures 50a (figure 1) pratiquées dans lesdites pièces de commande 5a empêchant ainsi leur enfoncement et l'actionnement du système de commande et d'actionnement 5.

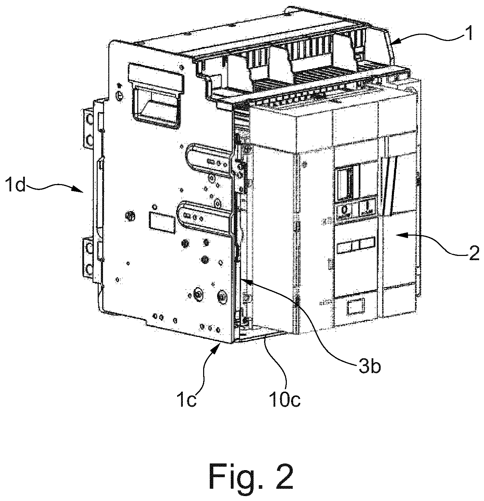

Si on se réfère plus particulièrement à la figure 11 on peut voir qu'un tel système d'embrochage 3 peut comprendre, d'une part, un mécanisme de transmission 3a mécanique comportant un arbre menant 30a, l'arbre mené 31a et une transmission 32a reliant ces derniers entre eux de sorte que la rotation de l'arbre menant 30a entraîne la rotation de l'arbre mené 31a via ladite transmission 32a et, d'autre part, un mécanisme de liaison 3b, non représenté sur la figure 11 (voir figures 1 et 2), apte à relier l'arbre mené 31a à l'appareil 2 lors de son insertion dans l'espace de réception 1b du châssis 1 pour pouvoir le déplacer par coulissement dans ce dernier dans plusieurs positions, lors de la rotation de l'arbre mené.

Si on se réfère notamment aux figures 1, 2 et 11, on peut voir que le système d'embrochage 3 peut comprendre en outre, de manière connue :
- un organe de manoeuvre amovible du type manivelle, non représenté (e), permettant d'actionner le mécanisme de transmission 3a. A cet effet, la manivelle est introduite dans une ouverture d'actionnement 3c située dans la partie avant du châssis à côté de l'ouverture d'entrée 10c dans l'espace de réception 1b du châssis 1 et dans l'axe de l'arbre menant 30a. Lorsque la manivelle est insérée fonctionnellement dans ladite ouverture d'actionnement 3c, ladite manivelle est raccordée fonctionnellement à l'arbre menant 30a de sorte que la rotation de la manivelle entraîne la rotation de l'arbre menant 30a pour actionner l'arbre mené 31a via la transmission 32a,
- un mécanisme de verrouillage 3d permettant de verrouiller le système d'embrochage 3 en empêchant l'introduction de la manivelle dans l'ouverture d'actionnement 3c et/ou en bloquant le mouvement cinématique du mécanisme de transmission 3a. La commande du mécanisme de verrouillage 3d, comme on peut le voir notamment sur les figures 1 et 11, est généralement réalisée à l'aide d'un organe de verrouillage 3e du type bouton poussoir mobile entre une position de commande du mécanisme de verrouillage et une position de verrouillage de ladite commande. La position de commande correspond à une position enfoncée de l'organe de verrouillage 3e, généralement situé du même côté que l'ouverture d'actionnement 3e de la manivelle, et la position de verrouillage correspond à une position non enfoncée de l'organe de verrouillage 3e (figure 1) et bloquée dans cette position au moyen d'un cadenas, non représenté, engagé dans une ouverture 30e pratiquée dans ledit organe de verrouillage 3e de sorte à empêcher son enfoncement.

Le système d'embrochage 3 utilisé dans la présente invention peut être un système connu tel que, par exemple, celui décrit et illustré dans le document de brevet FR2773648 ou être un système de d'embrochage du type de celui décrit et illustré dans la demande de brevet n° FR2012667 déposée par la présente demanderesse et ne seront pas décrits plus en détail dans la présente demande.

La présente invention peut prévoir préférentiellement, comme vu précédemment, que la position de verrouillage du suiveur de verrouillage 6b soit atteinte en position connectée du système d'embrochage 3 (figures 5 et 6). Cette position connectée est actionnée lorsque l'appareil 2 est inséré dans l'espace de réception 1b du châssis 1 pour le déplacer vers le côté arrière 1d du châssis 1, ledit déplacement de l'appareil 2 entraînant une poussée de celui-ci sur les pièces de commande 5a du système de commande et d'actionnement 5 du ou des volet(s) 4 actionnant le ou les volets 4 en position d'ouverture permettant la connexion électrique de l'appareil 2 aux bornes de raccordement principales.

Ainsi, grâce au dispositif selon la présente invention, dans le cas où l'appareil 2 est inséré dans l'espace de réception 1b du châssis 1 et mis dans la position connectée suite à l'actionnement du système d'embrochage 3 dans la position connectée, d'une part, les pièces de commande 5a du système de commande et d'actionnement 5 du ou des volets 4 sont enfoncées et le ou les volets 4 sont entraînés en position d'ouverture afin de permettre la connexion électrique dudit appareil 2 et, d'autre part, le suiveur de verrouillage 6b est mis dans sa position de verrouillage. Dans cette position de verrouillage, dans le cas où la présente invention prévoit que le suiveur de verrouillage 6b comprenne au moins une extrémité de verrouillage 61b ou 62b apte à s'engager dans au moins une encoche de verrouillage 41a, 42a, 41b, 42b du ou des volet(s) 4, la ou les extrémités de verrouillage 61b et/ou 62b du suiveur de verrouillage 6b sont engagé(s) dans la ou les encoches de verrouillage 42a, 41b du ou des volet(s).

Dans le cas où aucun appareil 2 n'est inséré dans l'espace de réception 1b du châssis 1, les pièces de commande 5a du système de commande et d'actionnement 5 du ou des volets 4 ne sont pas sollicitées et sont dans leur position extraite et le ou les volets 4 sont en position de fermeture. Dans ce cas, le système d'embrochage 3 est normalement actionné dans la position déconnectée et, lorsque le système d'embrochage 3 n'est pas verrouillé, un opérateur peut agir sur les pièces de commande 5a en les poussant pour les solliciter de sorte à actionner l'ouverture du ou des volet(s) 4. Pour empêcher cette ouverture du ou des volet(s) 4, la présente invention peut ainsi prévoir que le système d'embrochage 3 soit mis en position connectée de sorte à mettre le suiveur de verrouillage 6b dans sa position de verrouillage, ce qui aura pour effet de bloquer le ou les volet(s) 4 en position de fermeture et d'empêcher toute sollicitation des pièces de commande 5a du système de commande et d'actionnement 5 permettant l'ouverture du ou des volet(s) 4. Pour empêcher un changement de position du système d'embrochage 3 vers sa position déconnectée entraînant un déplacement du ou de chaque suiveur de verrouillage 6b vers sa position de déverrouillage, la présente invention peut encore prévoir de verrouiller le système d'embrochage 3 en agissant sur le mécanisme de verrouillage 3d du système d'embrochage 3.

Un tel dispositif de châssis selon la présente invention et notamment un tel système de verrouillage du ou des volet(s)4 pouvant être monté dans tout dispositif de châssis comprenant un arbre mené ou axe d'entraînement s'étendant le long du ou des volet(s) et permet de verrouiller le ou les volet(s) directement à l'aide du système d'embrochage ou tout autre mécanisme de châssis de ce type évitant l'utilisation et le placement des moyens de verrouillage actuels tels que les cadenas, ce qui simplifie l'utilisation du dispositif par l'opérateur qui agira uniquement sur la zone, dite IHM, de commande du système d'embrochage 3 généralement placée comme on peut le voir sur la figure 1 sur le côté de l'ouverture de réception 10c. Ladite zone IHM comprend notamment l'organe de verrouillage 3e du type bouton poussoir commandant le verrouillage ou le déverrouillage du système d'embrochage 3 et l'ouverture d'actionnement 3c permettant l'insertion de la manivelle d'actionnement du système d'embrochage dans ses positions fonctionnelles.

La présente invention a également pour objet un ensemble comprenant un dispositif de châssis et un appareil 2 électrique de coupure débrochable, ledit dispositif de châssis comprenant un châssis C recevant ledit appareil électrique de coupure débrochable D et un système d'embrochage 3 monté dans le châssis C.

Conformément à l'invention, dans un tel ensemble le dispositif de châssis consiste en un dispositif de châssis selon la présente invention.

Un tel ensemble qui comprend le dispositif de châssis selon la présente invention présente les avantages décrits précédemment.

Bien entendu, l'invention n'est pas limitée aux modes ou formes de réalisation décrit(es) et représentées aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de châssis pour appareil électrique de coupure débrochable, ledit dispositif comprenant un châssis (1) fixe, des bornes de raccordement électrique principales et des fenêtres (1a) d'accès auxdites bornes de raccordement, ledit châssis (1) comportant un espace de réception (1b) apte à recevoir un appareil (2) électrique de coupure débrochable et présentant deux côtés opposés (1c, 1d) dont l'un, dit côté avant (1c), comporte une ouverture d'entrée (10c) permettant l'insertion de l'appareil (2) dans ledit espace de réception (1b) et l'autre, dit côté arrière (1d), comprend lesdites bornes de raccordement et fenêtres (1a), ledit dispositif comprenant en outre, d'une part, un système d'embrochage (3) comprenant un arbre mené (31a) s'étendant parallèlement au côté arrière (1d) et un mécanisme de liaison (3b) apte à être relié mécaniquement à l'appareil (2) et à être actionné par l'arbre mené (31a) de sorte à déplacer ledit appareil (2) dans l'espace de réception (1b) vers le côté arrière (1d) dans plusieurs positions correspondant chacune à une position fonctionnelle du système d'embrochage (3) et, d'autre part, au moins un volet (4) mobile entre une position de fermeture desdites fenêtres (1a) empêchant l'accès auxdites bornes de raccordement et une position d'ouverture desdites fenêtres (1a) permettant ledit accès et réciproquement, un système de commande et d'actionnement (5) du ou desdits volet(s) (4) et un système de verrouillage (6) du ou desdits volet(s) (4), **caractérisé en ce que** le système de verrouillage (6) comprend au moins un ensemble de verrouillage (6a, 6b, 6c, 6d) comportant une came (6a) montée sur l'arbre mené (31a), ou intégrée dans ce dernier, de sorte à être entraînée en rotation par l'arbre mené (31a) et un suiveur de verrouillage (6b) apte à être mis en mouvement par ladite came (6a) de sorte à être déplacé, selon la position fonctionnelle du système d'embrochage (3), entre une position de verrouillage bloquant le ou au moins l'un des volets (4) en position de fermeture ou d'ouverture et une position de déverrouillage débloquant le ou les volets (4).

2. Dispositif de châssis, selon la revendication 1, caractérisé qu'il comprend deux étages haut et bas de bornes de raccordement principales et de fenêtres (1a) d'accès auxdites bornes de raccordement et un volet (4), dit volet (4) haut, pour la fermeture ou l'ouverture des fenêtres (1a) de l'étage haut et un volet (4), dit volet (4) bas pour la fermeture ou l'ouverture des fenêtres (1a) de l'étage bas, le volet (4) haut étant disposé au-dessus de l'arbre mené (31a) et le volet (4) bas étant disposé au-dessous de l'arbre mené (31a) et en ce que le suiveur de verrouillage (6b) est apte à bloquer, dans sa position de verrouillage, à la fois et simultanément, le volet (4) haut et le volet (4b) bas dans leur position de fermeture ou d'ouverture et à débloquer, dans sa position de déverrouillage, lesdits volets (4) haut et bas.

3. Dispositif de châssis, selon l'une quelconque des revendications 1 à 2, **caractérisé en ce que** le suiveur de verrouillage (6b) comprend une partie d'accrochage (60b) et la came (6a) présente un profil configuré pour être en contact avec ladite partie d'accrochage (60b) de manière discontinue ou continue.

4. Dispositif de châssis, selon l'une quelconque des revendications 1 à 3, **caractérisé en ce que** le ou chaque ensemble de verrouillage comprend des moyens de rappel (6d), par exemple du type ressort de compression ou de traction, reliant le suiveur de verrouillage (6b) à un point fixe du châssis (1) de sorte à exercer une force de rappel sur ledit suiveur de verrouillage (6b) tendant à le ramener vers sa position de déverrouillage.

5. Dispositif de châssis, selon l'une quelconque des revendications 1 à 4, **caractérisé en ce que** le ou chaque volet (4) comporte au moins une encoche de verrouillage (41a, 42a, 41b, 42b) et **en ce que** le suiveur de verrouillage (6b) du ou de chaque ensemble de verrouillage (6a, 6b, 6c, 6d) comprend au moins une extrémité de verrouillage (61b, 62b) apte à venir, dans la position de verrouillage du suiveur de verrouillage (6b), s'engager dans la ou au moins l'une desdites encoche(s) (41a, 42a, 41b, 42b) du ou de l'un des volets (4) pour bloquer le ou les volets (4) en position de fermeture ou d'ouverture et, dans la position de déverrouillage, à être extrait de la ou au moins l'une desdites encoche(s) (41a, 42a, 41b, 42b) pour débloquer le ou les volets (4).

6. Dispositif de châssis, selon la revendication 5 prise en combinaison avec la revendication 2, **caractérisé en ce que** le suiveur de verrouillage (6b) comprend, d'une part, une extrémité de verrouillage (61b) supérieure apte à venir, dans la position de verrouillage du suiveur de verrouillage (6b), s'engager dans la ou au moins l'une desdites encoche(s) (41a, 42a, 41b, 42b) du volet (4) haut pour le bloquer en position de fermeture ou d'ouverture et, dans la position de déverrouillage du suiveur de verrouillage (6b), à être extrait de la ou au moins l'une desdites encoche(s) (41a, 42a, 41b, 42b) pour débloquer le volet (4) haut et, d'autre part, une extrémité de verrouillage (62b) inférieure apte à venir, dans la position de verrouillage du suiveur de verrouillage (6b), s'engager dans la ou au moins l'une desdites encoche(s) (41a, 42a, 41b, 42b) du volet (4) bas pour le bloquer en position de fermeture ou d'ouverture et, dans la position de déverrouillage du suiveur de verrouillage (6b), à être extrait de la ou au moins l'une desdites encoche(s) (41a, 42a, 41b, 42b) pour débloquer le volet (4) bas.

7. Dispositif de châssis, selon la revendication 6, **caractérisé en ce que** le suiveur de verrouillage (6b) comprend une tête de verrouillage (63b) en forme U dont l'extrémité de chaque branche forme l'une des extrémités de verrouillage (61b, 62b) inférieure ou supérieure.

8. Dispositif de châssis, selon l'une quelconque des revendications 5 à 7, **caractérisé en ce que** le ou chaque volet (4) est constitué de deux panneaux (4a, 4b) coulissant chacun de sorte à pouvoir être déplacés en translation dans leur plan l'un derrière l'autre parallèlement à l'arbre mené (31a) et étant chacun ajouré par des ouvertures traversantes (40a, 40b), la position d'ouverture dudit volet (4) correspondant à un déplacement des deux panneaux (4a, 4b) dans une position où les ouvertures traversantes (40a, 40b) des deux panneaux (4a) sont en regard des fenêtres (1a) et la position de fermeture dudit volet (4) correspondant à un déplacement des panneaux (4a, 4b) où chaque fenêtre (1a) est en regard d'une partie pleine de chaque panneau (4a, 4b) et **en ce que** chaque panneau (4a, 4b) comprend deux encoches de verrouillage, à savoir une première encoche de verrouillage (41a, 41b) et une deuxième encoche de verrouillage (42a, 42b), lesdites premières encoches de verrouillage (41a, 41b) étant en vis-à-vis en position de fermeture dudit volet (4) et lesdites deuxièmes encoches de verrouillage (41a, 41b) étant en vis-à-vis en position d'ouverture dudit volet (4) de sorte que la ou l'une des extrémité(s) de verrouillage (61b, 62b) du suiveur de verrouillage (6b) puisse venir s'engager dans la première encoche de verrouillage (41a, 41b) de chaque panneau (4a, 4b) en position de fermeture dudit volet (4) ou dans la deuxième encoche de verrouillage (42a, 42b) de chaque panneau (4) en position d'ouverture dudit volet (4).

9. Dispositif de châssis, selon l'une quelconque des revendications 5 à 7, **caractérisé en ce que** le ou chaque volet (4) est constitué d'un panneau coulissant de sorte à pouvoir être déplacés en translation dans son plan parallèlement à l'arbre mené (31a) et étant ajouré par des ouvertures traversantes, la position d'ouverture dudit volet (4) correspondant à un déplacement du panneau dans une position où les ouvertures traversantes sont en regard des fenêtres (1a) et la position de fermeture dudit volet (4) correspondant à un déplacement du panneau où une partie pleine dudit panneau est en regard de chaque fenêtre (1a) et **en ce que** le panneau comprend deux encoches de verrouillage de sorte que la ou l'une des extrémité(s) de verrouillage (61b, 62b) du suiveur de verrouillage (6b) puisse venir s'engager dans la première encoche de verrouillage dudit volet (4) en position de fermeture ou dans la deuxième encoche de verrouillage dudit volet (4) en position d'ouverture.

10. Dispositif de châssis, selon l'une quelconque des revendications 1 à 9, **caractérisé en ce que** le ou chaque ensemble de verrouillage comprend une coulisse (6c) et le suiveur de verrouillage (6b) est monté en translation dans ladite coulisse (6c) suivant une direction perpendiculaire à l'arbre mené (31a), de préférence perpendiculaire à l'arbre mené (31a) et au plan des volets (4).

11. Dispositif de châssis, selon la revendication 10, **caractérisé en ce que** le suiveur de verrouillage (6b) comprend une tête de verrouillage (63b) comprenant la ou les extrémités de verrouillage (61b, 62b), le cas échéant la tête en forme de U selon la revendication 7, et un corps (64b), de préférence allongé, configuré pour pouvoir glisser dans la coulisse (6c).

12. Dispositif de châssis, selon l'une quelconque des revendications 1 à 11, **caractérisé en ce que** le système d'embrochage (3) du dispositif de châssis comprend trois positions fonctionnelles pouvoir déplacer l'appareil (2) dans le châssis (1) à savoir une position, dite position connectée ou embrochée, dans laquelle l'appareil (2) est connecté aux bornes de raccordement principales, et le cas échéant à des bornes de raccordement secondaires, une position, dite position déconnectée ou débrochée, dans laquelle l'appareil n'est connecté ni aux bornes de raccordement principales, ni le cas échéant aux bornes de raccordement secondaires, et une position intermédiaire, dite position test, permettant de tester ou de contrôler l'état de l'appareil et dans laquelle l'appareil (2) n'est pas connecté aux bornes de raccordement principales et **en ce que** la position de verrouillage du suiveur de verrouillage (6b) du ou de chaque ensemble de verrouillage est réalisée dans ladite position connectée du système d'embrochage (3).

13. Ensemble comprenant un dispositif de châssis et un appareil (2) électrique de coupure débrochable, ledit dispositif de châssis comprenant un châssis (C) recevant ledit appareil électrique de coupure débrochable (D) et un système d'embrochage (3) monté dans le châssis (C), **caractérisé en ce que** le dispositif de châssis consiste en un dispositif de châssis selon l'une quelconque des revendications 1 à 12.

## Patentansprüche

1. Einschubrahmenvorrichtung für ein ausfahrbares elektrisches Schaltgerät, wobei die Vorrichtung einen ortsfesten Einschubrahmen (1), elektrische Hauptanschlussklemmen und Fenster (1a) für den Zugang zu diesen Anschlussklemmen umfasst, wobei der Einschubrahmen (1) einen Aufnahmeraum (1b) umfasst, der geeignet ist, ein ausfahrbares elektrisches Schaltgerät (2) aufzunehmen, und zwei gegenüberliegende Seiten (1c, 1d) aufweist, von denen die eine, Vorderseite (1c) genannt, eine Eingangsöffnung (10c) aufweist, die das Einsetzen des Gerätes (2) in den Aufnahmeraum (1b) ermöglicht, und die andere, Hinterseite (1d) genannt, die Anschlussklemmen und Fenster (1a) umfasst, wobei die Vorrichtung außerdem einerseits ein Einfahrsystem (3) umfasst, das eine angetriebene Welle (31a), die sich parallel zur Hinterseite (1d) erstreckt, und einen Verbindungsmechanismus (3b), der mit dem Gerät (2) mechanisch verbindbar ist und von der angetriebenen Welle (31a) betätigbar ist, um das Gerät (2) im Aufnahmeraum (1b) in Richtung der Hinterseite (1d) in mehrere jeweils einer Betriebsposition des Einfahrsystems (3) entsprechende Positionen zu verlagern, umfasst, und andererseits mindestens eine Klappe (4), die zwischen einer Schließposition der Fenster (1a), die den Zugang zu den Anschlussklemmen verhindert, und einer Öffnungsposition der Fenster (1a), die diesen Zugang ermöglicht, und umgekehrt bewegbar ist, ein System zur Steuerung und Betätigung (5) der Klappe(n) (4) und ein System zur Verriegelung (6) der Klappe(n) (4), **dadurch gekennzeichnet, dass** das Verriegelungssystem (6) mindestens eine Verriegelungsanordnung (6a, 6b, 6c, 6d) umfasst, die einen Nocken (6a) aufweist, der auf der angetriebenen Welle (31a) angebracht oder in diese Letztere integriert ist, so dass er von der angetriebenen Welle (31a) drehend angetrieben wird, und einen Verriegelungs-Nockenfolger (6b), der von dem Nocken (6a) in Bewegung versetzbar ist, um entsprechend der Betriebsposition des Einfahrsystems (3) zwischen einer Verriegelungsposition, welche die oder mindestens eine der Klappen (4) in der Schließ- oder Öffnungsposition blockiert, und einer Entriegelungsposition, welche die Klappe oder die Klappen (4) entsperrt, verlagert zu werden.

2. Einschubrahmenvorrichtung nach Anspruch 1, **dadurch gekennzeichnet, dass** sie zwei Stufen, eine hohe und eine niedrige, von Hauptanschlussklemmen und von Fenstern (1a) für den Zugang zu diesen Anschlussklemmen und eine Klappe (4), hohe Klappe (4) genannt, zum Schließen oder Öffnen der Fenster (1a) der hohen Stufe und eine Klappe (4), niedrige Klappe (4) genannt, zum Schließen oder Öffnen der Fenster (1a) der niedrigen Stufe umfasst, wobei die hohe Klappe (4) oberhalb der angetriebenen Welle (31a) angeordnet ist und die niedrige Klappe (4) unterhalb der angetriebenen Welle (31a) angeordnet ist, und dadurch, dass der Verriegelungs-Nockenfolger (6b) geeignet ist, in seiner Verriegelungsposition auf einmal und gleichzeitig die hohe Klappe (4) und die niedrige Klappe (4b) in ihrer Schließ- oder Öffnungsposition zu blockieren und in seiner Entriegelungsposition die hohe und die niedrige Klappe (4) zu entsperren.

3. Einschubrahmenvorrichtung nach einem der Ansprüche 1 bis 2, **dadurch gekennzeichnet, dass** der Verriegelungs-Nockenfolger (6b) einen Einhängeteil (60b) umfasst und der Nocken (6a) ein Profil aufweist, das dafür ausgelegt ist, sich mit dem Einhängeteil (60b) kontinuierlich oder diskontinuierlich in Kontakt zu befinden.

4. Einschubrahmenvorrichtung nach einem der Ansprüche 1 bis 3, **dadurch gekennzeichnet, dass** die oder jede Verriegelungsanordnung Rückstellmittel (6d) umfasst, zum Beispiel vom Typ einer Druck- oder Zugfeder, die den Verriegelungs-Nockenfolger (6b) mit einem festen Punkt des Einschubrahmens (1) verbinden, um eine Rückstellkraft auf den Verriegelungs-Nockenfolger (6b) auszuüben, die bestrebt ist, ihn in seine Entriegelungsposition zurückzustellen.

5. Einschubrahmenvorrichtung nach einem der Ansprüche 1 bis 4, **dadurch gekennzeichnet, dass** die oder jede Klappe (4) mindestens eine Verriegelungskerbe (41a, 42a, 41b, 42b) aufweist, und dadurch, dass der Verriegelungs-Nockenfolger (6b) der oder jeder Verriegelungsanordnung (6a, 6b, 6c, 6d) mindestens ein Verriegelungsende (61b, 62b) umfasst, das geeignet ist, in der Verriegelungsposition des Verriegelungs-Nockenfolgers (6b) in die oder mindestens eine der Kerbe(n) (41a, 42a, 41b, 42b) der oder der einer der Klappe (n) (4) einzugreifen, um die Klappe oder die Klappen (4) in der Schließ- oder Öffnungsposition zu blockieren, und in der Entriegelungsposition aus der oder der mindestens einen der Kerbe(n) (41a, 42a, 41b, 42b) herausgezogen zu werden, um die Klappe oder die Klappen (4) zu entsperren.

6. Einschubrahmenvorrichtung nach Anspruch 5 in Verbindung mit Anspruch 2, **dadurch gekennzeichnet, dass** der Verriegelungs-Nockenfolger (6b) einerseits ein oberes Verriegelungsende (61b) umfasst, das geeignet ist, in der Verriegelungsposition des Verriegelungs-Nockenfolgers (6b) in die oder mindestens eine der Kerbe(n) (41a, 42a, 41b, 42b) der hohen Klappe (4) einzugreifen, um sie in der Schließ- oder Öffnungsposition zu blockieren, und in der Entriegelungsposition des Verriegelungs-Nockenfolgers (6b) aus der oder der mindestens einen der Kerbe(n) (41a, 42a, 41b, 42b) herausgezogen zu werden, um die obere Klappe (4) zu entsperren, und andererseits ein unteres Verriegelungsende (62b), das geeignet ist, in der Verriegelungsposition des Verriegelungs-Nockenfolgers (6b) in die oder mindestens eine der Kerbe(n) (41a, 42a, 41b, 42b) der niedrigen Klappe (4) einzugreifen, um sie in der Schließ- oder Öffnungsposition zu blockieren, und in der Entriegelungsposition des Verriegelungs-Nockenfolgers (6b) aus der oder der mindestens einen der Kerbe(n) (41a, 42a, 41b, 42b) herausgezogen zu werden, um die untere Klappe (4) zu entsperren.

7. Einschubrahmenvorrichtung nach Anspruch 6, **dadurch gekennzeichnet, dass** der Verriegelungs-Nockenfolger (6b) einen Verriegelungskopf (63b) von der Form eines "U" umfasst, bei dem das Ende jedes Schenkels eines von dem oberen und dem unteren Verriegelungsende (61b, 62b) bildet.

8. Einschubrahmenvorrichtung nach einem der Ansprüche 5 bis 7, **dadurch gekennzeichnet, dass** die oder jede Klappe (4) aus zwei Platten (4a, 4b) besteht, die jeweils so gleiten, dass sie in ihrer Ebene hintereinander parallel zu der angetriebenen Welle (31a) translatorisch bewegt werden können, und die jeweils von Durchgangsöffnungen (40a, 40b) durchbrochen sind, wobei die Öffnungsposition der Klappe (4) einer Verschiebung der zwei Platten (4a, 4b) in eine Position entspricht, in der sich die Durchgangsöffnungen (40a, 40b) der zwei Platten (4a) gegenüber den Fenstern (1a) befinden, und die Schließposition der Klappe (4) einer Verschiebung der Platten (4a, 4b) entspricht, bei der sich jedes Fenster (1a) gegenüber einem massiven Teil der jeweiligen Platte (4a, 4b) befindet, und dadurch, dass jede Platte (4a, 4b) zwei Verriegelungskerben umfasst, nämlich eine erste Verriegelungskerbe (41a, 41b) und eine zweite Verriegelungskerbe (42a, 42b), wobei die ersten Verriegelungskerben (41a, 41b) in der Schließposition der Klappe (4) einander gegenüberliegen und die zweiten Verriegelungskerben (42a, 42b) in der Öffnungsposition der Klappe (4) einander gegenüberliegen, so dass das oder eines der Verriegelungsende(n) (61b, 62b) des Verriegelungs-Nockenfolgers (6b) in die erste Verriegelungskerbe (41a, 41b) jeder Platte (4a, 4b) in der Schließposition der Klappe (4) oder in die zweite Verriegelungskerbe (42a, 42b) jeder Platte (4a, 4b) in der Öffnungsposition der Klappe (4) eingreifen kann.

9. Einschubrahmenvorrichtung nach einem der Ansprüche 5 bis 7, **dadurch gekennzeichnet, dass** die oder jede Klappe (4) aus einer Platte besteht, die so gleitet, dass sie in ihrer Ebene parallel zu der angetriebenen Welle (31a) translatorisch bewegt werden kann, und die von Durchgangsöffnungen durchbrochen ist, wobei die Öffnungsposition der Klappe (4) einer Verschiebung der Platte in eine Position entspricht, in der sich die Durchgangsöffnungen gegenüber den Fenstern (1a) befinden, und die Schließposition der Klappe (4) einer Verschiebung der Platte entspricht, bei der sich gegenüber jedem Fenster (1a) ein massiver Teil der Platte befindet, und dadurch, dass die Platte zwei Verriegelungskerben umfasst, so dass das oder eines der Verriegelungsende(n) (61b, 62b) des Verriegelungs-Nockenfolgers (6b) in die erste Verriegelungskerbe der Klappe (4) in der Schließposition oder in die zweite Verriegelungskerbe der Klappe (4) in der Öffnungsposition eingreifen kann.

10. Einschubrahmenvorrichtung nach einem der Ansprüche 1 bis 9, **dadurch gekennzeichnet, dass** die oder jede Verriegelungsanordnung eine Gleitführung (6c) umfasst und der Verriegelungs-Nockenfolger (6b) in der Gleitführung (6c) entlang einer Richtung, die senkrecht zu der angetriebenen Welle (31a), vorzugsweise senkrecht zu der angetriebenen Welle (31a) und zu der Ebene der Klappen (4) ist, translatorisch verschiebbar angebracht ist.

11. Einschubrahmenvorrichtung nach Anspruch 10, **dadurch gekennzeichnet, dass** der Verriegelungs-Nockenfolger (6b) einen Verriegelungskopf (63b), der das oder die Verriegelungsende(n) (61b, 62b) umfasst, gegebenenfalls den U-förmigen Kopf nach Anspruch 7, und einen vorzugsweise lang gestreckten Körper (64b), der dafür ausgelegt ist, in der Gleitführung (6c) gleiten zu können, umfasst.

12. Einschubrahmenvorrichtung nach einem der Ansprüche 1 bis 11, **dadurch gekennzeichnet, dass** das Einfahrsystem (3) der Einschubrahmenvorrichtung drei Betriebspositionen umfasst, in die das Gerät (2) im Einschubrahmen (1) bewegt werden kann, nämlich eine Position, verbundene oder eingefahrene Position genannt, in der das Gerät (2) mit den Hauptanschlussklemmen und gegebenenfalls mit sekundären Anschlussklemmen verbunden ist, eine Position, abgeklemmte oder ausgefahrene Position genannt, in der das Gerät weder mit den Hauptanschlussklemmen noch gegebenenfalls mit den sekundären Anschlussklemmen verbunden ist, und eine Zwischenposition, Testposition genannt, die es ermöglicht, den Zustand des Gerätes zu testen oder zu kontrollieren, und in der das Gerät (2) nicht mit den Hauptanschlussklemmen verbunden ist, und dadurch, dass die Verriegelungsposition des Verriegelungs-Nockenfolgers (6b) der oder jeder Verriegelungsanordnung in der verbundenen Position des Einfahrsystems (3) realisiert ist.

13. Anordnung, welche eine Einschubrahmenvorrichtung und ein ausfahrbares elektrisches Schaltgerät (2) umfasst, wobei die Einschubrahmenvorrichtung einen Einschubrahmen (C), der das ausfahrbare elektrische Schaltgerät (D) aufnimmt, und ein in dem Einschubrahmen (C) angebrachtes Einfahrsystem (3) umfasst, **dadurch gekennzeichnet, dass** die Einschubrahmenvorrichtung aus einer Einschubrahmenvorrichtung nach einem der Ansprüche 1 bis 12 besteht.

## Claims

1. Frame device for draw-out electrical switchgear, said device comprising a fixed frame (1), main electrical connection terminals and windows (1a) for access to said connection terminals, said frame (1) including a receiving space (1b) adapted to receive draw-out electrical switchgear (2) and having two opposite sides (1c, 1d) of which one, termed the front side (1c), includes an entry opening (10c) enabling insertion of the switchgear (2) in said receiving space (1b) and the other, termed the rear side (1d), comprises said connection terminals and windows (1a), said device further comprising, on the one hand, a plugging-in system (3) comprising a driven shaft (31a) extending parallel to the rear side (1d) and a connection mechanism (3b) adapted to be mechanically connected to the switchgear (2) and to be actuated by the driven shaft (31a) so as to move said switchgear (2) in the receiving space (1b) towards the rear side (1d) into a plurality of positions, each corresponding to a functional position of the plugging-in system (3) and, on the other hand, at least one shutter (4) mobile between a position in which said windows (1a) are closed, preventing access to said connection terminals, and a position in which said windows (1a) are open, enabling said access and vice-versa, a system (5) for controlling and actuating said shutter or shutters (4) and a system (6) for locking said shutter or shutters (4), **characterized in that** the locking system (6) comprises at least one locking assembly (6a, 6b, 6c, 6d) including a cam (6a) mounted on the driven shaft (31a) or integrated therein so as to be driven in rotation by the driven shaft (31a) and a locking follower (6b) adapted to be moved by said cam (6a) so as, depending on the functional position of the plugging-in system (3), to be moved between a locking position immobilizing the shutter or at least one of the shutters (4) in the closed or open position and an unlocking position freeing the shutter or shutters (4).

2. Frame device according to Claim 1, **characterized in that** it comprises two rows, top and bottom, of main connection terminals and of windows (1a) for access to said connection terminals and one shutter (4), termed the top shutter (4), for closing or opening the windows (1a) of the top row and one shutter (4), termed the bottom shutter (4), for closing or opening the windows (1a) of the bottom row, the top shutter (4) being disposed above the driven shaft (31a) and the bottom shutter (4) being disposed below the driven shaft (31a), and **in that**, in its locking position, the locking follower (6b) is adapted to immobilize simultaneously both the top shutter (4) and the bottom shutter (4b) in their closed or open position and, in its unlocking position, to free said top and bottom shutters (4).

3. Frame device according to either one of Claims 1 and 2, **characterized in that** the locking follower (6b) comprises a catching part (60b) and the cam (6a) has a profile configured to be in contact with said catching part (60b) either continuously or discontinuously.

4. Frame device according to any one of Claims 1 to 3, **characterized in that** the or each locking assembly comprises return means (6d), for example of the compression or tension spring type, connecting the locking follower (6b) to a fixed point of the frame (1) so as to exert a return force on said locking follower (6b) tending to return it to its unlocking position.

5. Frame device according to any one of Claims 1 to 4, **characterized in that** the or each shutter (4) includes at least one locking notch (41a, 42a, 41b, 42b) and **in that** the locking follower (6b) of the or each locking assembly (6a, 6b, 6c, 6d) comprises at least one locking end (61b, 62b) adapted, when the locking follower (6b) is in the locking position, to engage in said notch or at least one of said notches (41a, 42a, 41b, 42b) of the shutter or of one of the shutters (4) to immobilize the shutter or shutters (4) in the closed or open position and, in the unlocking position, to be extracted from said notch or at least one of said notches (41a, 42a, 41b, 42b) to free the shutter or shutters (4).

6. Frame device according to Claim 5 in combination with Claim 2, **characterized in that** the locking follower (6b) comprises, on the one hand, an upper locking end (61b) adapted, when the locking follower (6b) is in the locking position, to engage in said notch or at least one of said notches (41a, 42a, 41b, 42b) of the top shutter (4) to immobilize it in the closed or open position and, when the locking follower (6b) is in the unlocking position, to be extracted from said notch or at least one of said notches (41a, 42a, 41b, 42b) to free the top shutter (4) and, on the other hand, a lower locking end (62b) adapted, when the locking follower (6b) is in the locking position, to engage in said notch or at least one of said notches (41a, 42a, 41b, 42b) of the bottom shutter (4) to immobilize it in the closed or open position and, when the locking follower (6b) is in the unlocking position, to be extracted from said notch or at least one of said notches (41a, 42a, 41b, 42b) to free the bottom shutter (4).

7. Frame device according to Claim 6, **characterized in that** the locking follower (6b) comprises a locking head (63b) in the shape of a U of which the end of each branch forms one of the upper or lower locking ends (61b, 62b).

8. Frame device according to any one of Claims 5 to 7, **characterized in that** the or each shutter (4) consists of two panels (4a, 4b), each sliding so that it can be moved in translation in its plane one behind the other parallel to the driven shaft (31a) and each pierced by through-openings (40a, 40b), the open position of said shutter (4) corresponding to a movement of the two panels (4a, 4b) into a position in which the through-openings (40a, 40b) of the two panels (4a) face the windows (1a), and the closed position of said shutter (4) corresponding to a movement of the panels (4a, 4b) in which each window (1a) faces a solid part of each panel (4a, 4b), and **in that** each panel (4a, 4b) comprises two locking notches, namely a first locking notch (41a, 41b) and a second locking notch (42a, 42b), said first locking notches (41a, 41b) being face-to-face when said shutter (4) is in the closed position, and said second locking notches (41a, 41b) being face-to-face when said shutter (4) is in the open position so that the locking end or one of the locking ends (61b, 62b) of the locking follower (6b) can engage in the first locking notch (41a, 41b) of each panel (4a, 4b) when said shutter (4) is in the closed position, or in the second locking notch (42a, 42b) of each panel (4) when said shutter (4) is in the open position.

9. Frame device according to any one of Claims 5 to 7, **characterized in that** the or each shutter (4) consists of a sliding panel that slides so as to be able to be moved in translation in its plane parallel to the driven shaft (31a) and that is pierced by through-openings, the open position of said shutter (4) corresponding to a movement of the panel into a position in which the through-openings face the windows (1a) and the closed position of said shutter (4) corresponding to a movement of the panel in which a solid part of said panel faces each window (1a), and **in that** the panel comprises two locking notches so that the locking end or one of the locking ends (61b, 62b) of the locking follower (6b) can engage in the first locking notch of said shutter (4) in the closed position or in the second locking notch of said shutter (4) in the open position.

10. Frame device according to any one of Claims 1 to 9, **characterized in that** the or each locking assembly comprises a slideway (6c) and the locking follower (6b) is mounted to move in translation in said slideway (6c) in a direction perpendicular to the driven shaft (31a), preferably perpendicular to the driven shaft (31a) and to the plane of the shutters (4).

11. Frame device according to Claim 10, **characterized in that** the locking follower (6b) comprises a locking head (63b) comprising the locking end or ends (61b, 62b), where applicable the U-shaped head according to Claim 7, and a body (64b), preferably elongate, configured to be able to slide in the slideway (6c).

12. Frame device according to any one of Claims 1 to 11, **characterized in that** the plugging-in system (3) of the frame device has three functional positions so as to be able to move the switchgear (2) in the frame (1), namely a position, termed the connected or plugged-in position, in which the switchgear (2) is connected to the main connection terminals, and where applicable to secondary connection terminals, a position, termed the disconnected or unplugged position, in which the switchgear is not connected either to the main connection terminal or, where applicable, to the secondary connection terminals, and an intermediate position, termed the test position, enabling testing or inspection of the state of the switchgear and in which the switchgear (2) is not connected to the main connection terminals, and **in that** the locking position of the locking follower (6b) of the or each locking assembly is brought about when the plugging-in system (3) is in said connected position.

13. Assembly comprising a frame device and draw-out electrical switchgear (2), said frame device comprising a frame (C) receiving said draw-out electrical switchgear (D) and a plugging-in system (3) mounted in the frame (C), **characterized in that** the frame device consists of a frame device according to any one of Claims 1 to 12.
